**Europäisches Patentamt**

(19) **European Patent Office**

**Office européen des brevets**

(11) Veröffentlichungsnummer: **0 101 548**

**B1**

(12) # EUROPÄISCHE PATENTSCHRIFT

(45) Veröffentlichungstag der Patentschrift:
08.04.87

(21) Anmeldenummer: **83106517.2**

(22) Anmeldetag: **04.07.83**

(51) Int. Cl.⁴: **H 02 M 1/08,** H 02 M 7/529

(54) Digitaler Steuersatz für Pulswechselrichter.

(30) Priorität: **05.07.82 DE 3225033**

(43) Veröffentlichungstag der Anmeldung:
**29.02.84 Patentblatt 84/9**

(45) Bekanntmachung des Hinweises auf die Patenterteilung:
**08.04.87 Patentblatt 87/15**

(84) Benannte Vertragsstaaten:
**CH DE FR IT LI**

(56) Entgegenhaltungen:
**AT-B-310 295**
**DE-A-3 101 102**

**Patent Abstracts of Japan Band 6, Nr. 176, 10 September 1982**

(73) Patentinhaber: **Siemens Aktiengesellschaft Berlin und München, Wittelsbacherplatz 2, D-8000 München 2 (DE)**

(72) Erfinder: **Hackel, Ingo, Dr., Königsberger Strasse 7, D-8521 Spardorf (DE)**
Erfinder: **Wollschläger, Klaus, Buckenhofer Weg 13, D-8520 Erlangen (DE)**

EP 0 101 548 B1

## Beschreibung

Die Erfindung bezieht sich auf einen digitalen Steuersatz für Pulswechselrichter mit vorgebbarer Zwischenkreis-Gleichspannung, bei dem die Pulsbreitenmodulation des Steuersignales jeder Phase aus der Abtastung einer Referenzspannung derart bestimmbar ist, daß das Produkt aus Pulsbreite und Zwischenkreisgleichspannung proportional dem Produkt aus abgetasteter Referenzspannung und Abtastperiodendauer ist.

Mit diesem Oberbegriff wird auf eine Anordnung Bezug genommen, wie sie beispielsweise in der DE-OS 31 01 102 oder in der Siemens-Zeitschrift 1971, Seiten 154 bis 161 näher beschrieben ist.

Der vom Steuersatz gesteuerte Thyristor- oder Transistorwechselrichter läßt sich als Kombination periodisch arbeitender Schalter betrachten. Bei einem Wechselrichter mit Drehstromausgang legen die Schalter abwechselnd den negativen oder positiven Pol einer Gleichspannung an die Ausgangsklemmen. Die Aufgabe der Steuerung ist es, die Stellungen dieser Schalter periodisch so zu wechseln, daß zwischen den Ausgangsklemmen ein dreiphasiges symmetrisches Spannungssystem entsteht, dessen Grundschwingung eine vorgegebene Frequenz und Amplitude hat.

Ein hoher Grundschwingungsgehalt am Ausgang des Wechselrichters läßt sich erreichen, wenn man die Impulsbreiten proportional zu den Augenblickswerten der Grundschwingung variiert. Die gewünschte Grundschwingung kann dabei als Referenzspannung vorgegeben werden; durch geeignete Abtastung mit Hilfsspannungen wird dann daraus der entsprechende Verlauf des Schaltspieles gebildet.

Ein bekanntes Verfahren ist die Abtastung der Referenzspannung mit einer Dreieckspannung. Hierbei wird die sinusförmige Referenzspannung mit der Grundschwingungsfrequenz und veränderlicher Amplitude durch eine symmetrische Dreieckspannung höherer Frequenz abgetastet. In den Schnittpunkten der Dreieckspannung mit der Referenzspannung wird jeweils der zugehörige Schalter betätigt.

Es ist ferner in diesem Zusammenhang auch ein Modulationsverfahren bekannt, bei dem die Referenzspannung durch ein System von Gleichspannungen abgetastet wird.

Bei diesen bekannten Steuerverfahren ist normalerweise zum Vergleich von Referenzspannung und Abtastspannung ein erheblicher schaltungstechnischer Aufwand erforderlich; außerdem sind sie häufig relativ zeitaufwendig. Als Beispiel hierfür sei die Lösung nach der vorstehend genannten DE-OS 31 01 102 erwähnt, bei der eine mit Komparator arbeitende Schaltung für jede Phase gesondert vorhanden sein muß.

Die Aufgabe der vorliegenden Erfindung besteht darin, einen digitalen Steuersatz der eingangs genannten Art so auszubilden, daß bereits gewisse Zeit vor der Ausgabe des betreffenden Steuersignales der erforderliche Wert der Pulsbreite zur Verfügung steht.

Diese Aufgabe wird erfindungsgemäß durch folgende Merkmale gelöst:

a) es ist ein Mikrocomputersystem mit einem Speicher vorgesehen, in dem die Referenzspannung wertmäßig hinterlegt ist,

b) zu durch das Taktraster des Mikrocomputersystems vorgegebenen äquidistanten Abtastzeitpunkten werden die diesen Zeitpunkten zugeordneten Referenzspannungswerte aus dem Speicher entnommen,

c) hieraus jeweils für alle Phasen die erforderliche Pulsbreite berechnet und

d) anschließend jeweils für alle Phasen die entsprechenden Steuersignale an den Pulswechselrichter ausgegeben.

Wie geschildert, kann die gewünschte Funktion in einfacher Weise in den Speichern des Mikrocomputers hinterlegt werden. Im Prinzip läßt sich auf diese Weise jede periodische Funktion beliebiger Kurvenform in Pulslängen codieren, wobei als Bedingung nur zu beachten ist, daß die Frequenz der zu codierenden Funktion deutlich kleiner als die Taktfrequenz der Pulsmodulation ist. Das vorgenannte Modulationsverfahren ist ein reines Steuerverfahren und benötigt in Prinzip keinerlei Meßsignale. Falls jedoch mit veränderlicher Spannung im Gleichspannungszvischenkreis gearbeitet wird, kann zur Korrektur der Modulation auch die Gleichspannung im Zwischenkreis gemessen und entsprechend berücksichtigt werden. Normalerweise wird es sich um einen Festwert handeln.

Ferner ist es auf relativ einfache Weise auch möglich, die Pulsdauer, die sich bei der Berechnung im Mikrocomputer ergibt, zu begrenzen, so daß auch auf eine externe Überwachungs- und Impulsauswertelogik verzichtet werden kann. Umgekehrt kann auch bei großem Modulationshub ohne weitere Logik eine Trapezform der Ausgangsspannung erzeugt werden.

Anhand eines in der Zeichnung dargestellten Ausführungsbeispieles sei die Erfindung näher erläutert; es zeigen:

Fig. 1 das Prinzipschaltbild des Pulswechselrichters mit digitalem Steuersatz,

Fig. 2 den Verlauf der Referenzspannung, und

Fig. 3 die Pulsbreitensteuersignale, die vom Steuersatz an den Pulswechselrichter gelangen.

Der bekannte Pulsumrichter besteht aus einem an ein Drehstromnetz angeschlossenen Gleichrichter 1, einem Gleichspannungszwischenkreis 5 mit positivem und negativem Gleichspannungspol und einem an den Gleichspannungszwischenkreis 5 angeschlossenen Pulswechselrichter 2 mit Transistoren oder Thyristoren. An den Ausgang dieses Pulswechselrichters 2 ist eine in der KLDrehzahl und Drehrichtung zu steuernde Drehstrommaschine 3 angeschlossen.

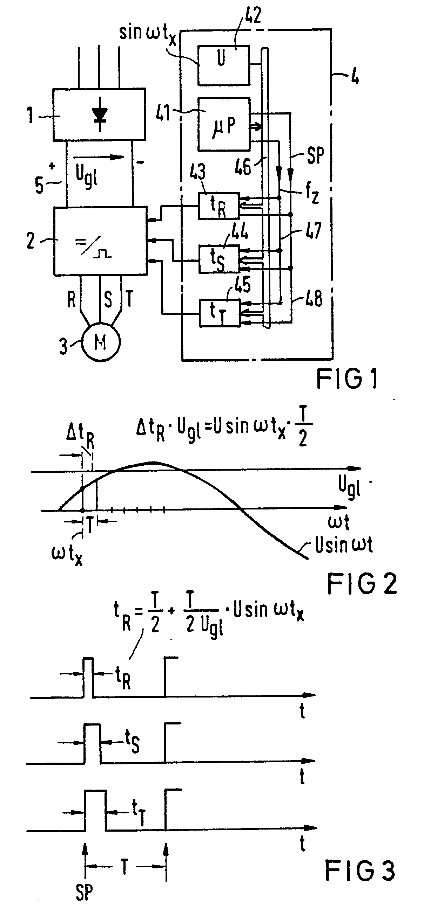

Der digitale Steuersatz des Pulswechselrichters 2 ist ein Einchip- Mikrocomputersystem 4. Dieses enthält als Kern einen Mikroprozessor 41, der zusammen mit einem Daten- und Programmspeicher 42 an den gemeinsamen Datenbus 46 angeschlossen ist. Im Speicher 42 sind das Steuerprogramm, benötigte Daten und insbesondere die gewünschten Funktionen hinterlegt, z.B. die Amplitude U in Abhängigkeit von der Frequenz f und Werte der Sinusfunktion sin $\omega\,t_x$, so daß sich auf einfache Weise durch Produktbildung die in Figur 2 gezeigte Sinuskurve als Referenzspannung für die Pulsmodulation erzeugen läßt.

Ferner sind an den Datenbus 46 noch Zeitbausteine 43, 44 und 45 angeschlossen, die auf die vom Mikroprozessor 41 errechneten Zeiten für die Pulsbreitensteuersignale einstellbar sind. Durch einen Startbefehl SP auf der Leitung 48 werden alle Pulsbreitensteuersignale aller Phasen RST zum gleichen Zeitpunkt für den Pulswechselrichter 2 wirksam. Durch eine hohe Zählfrequenz auf der Leitung 47 werden die als Zähler ausgebildeten Zeitbausteine 43 bis 45 mit einer vorgegebenen Zählfrequenz fz leergezählt. Ist die Zählung auf Null angelangt, so ist das betreffende Pulsbreitensteuersignal beendet. Die sich hierdurch ergebenden Pulsbreitensteuersignale $t_R$, $t_S$, $t_T$ sind beispielsweise in Figur 3 näher dargestellt.

Wie bereits eingangs erwähnt, funktioniert das Steuerverfahren in der Weise, daß die Pulsbreitenmodulation aus der Bedingung bestimmbar ist, daß das Produkt aus Pulsbreite und Zwischenkreisgleichspannung proportional dem Produkt aus der Referenzspannung im Abtastintervall und der Abtastperiodendauer T gemacht ist. Es wird also jeveils zu den Abtastzeitpunkten $\omega t_x$, die im Abstand T, d.h. der Abtastperiodendauer voneinander entfernt liegen, die Referenzspannung U sin $\omega t_x$ bestimmt, und zwar in der Weise, daß mit dem Mikroprozessor das Produkt U x sind $\omega t_x$ gebildet wird. Dieses Produkt wird mit der halben Abtastperindendauer $\frac{T}{2}$ multipliziert und durch die Gleichspannung $U_{g1}$ im Gleichspannungszwischenkreis 5 dividiert, so daß sich eine Impulsbreite folgenden Wertes - hier dargestellt für die Phase R - ergibt:

$$\Delta t_R = \frac{T}{2U_{g1}} \cdot U \sin \omega\, t_x$$

Diese kommt als Wechselanteil zu einem für die Ausgangsspannung Null benötigten Pulsbeereitensteuersignal $\frac{T}{2}$ hinzu,

so daß sich als Gesamtpulsbreitensteuersignal für die Phase R beispielsweise:

$$t_R = \frac{T}{2} + \frac{T}{2U_{g1}} \cdot U \sin \omega\, t_x$$

ergibt.

Sinngemäß auf gleiche Weise werden auch die Pulsbreiten für die anderen Phasen errechnet und zum gleichen Zeitpunkt wirksam gemacht. Da die Referenzkurve bei gegebenem $\omega$ (und U) festliegt, kann die eigentliche Berechnung der Pulsbreitensteuersignale jeweils in dem Intervall vor der Ausgabe des Startbefehls SP durchgeführt werden. Ferner wurde der Einfachheit halber bei dem vorliegenden Verfahren davon ausgegangen, daß der Wert der Referenzspannung im Abtastzeitpunkt zur Berechnung benutzt wurde. Es ist natürlich genau so gut möglich, einen Mittelwert der Referenzspannung zwischen zwei Abtastzeitpunkten, d.h. im Abtastintervall zu benutzen, falls man einen geringeren Oberwellengahalt der Grundschwingung wünscht.

**Patentansprüche**

1. Digitaler Steuersatz (4) für Pulswechselrichter (2) mit vorgebbarer Zwischenkreis-Gleichspannung (Ug 2) bei dem die Pulsbreitenmodulation des Steuersignales jeder Phase aus der Abtastung einer Referenzspannung derart bestimmbar ist, daß das Produkt aus Pulsbreite ($\Delta t_R$) und Zwischenkreisgleichspannung (Ug 2) proportional dem Produkt aus abgetasteter Referenzspannung sin ($\omega t_x$) und Abtastperiodendauer (T) ist, gekennzeichnet durch folgende Merkmale:

a) es ist ein Mikrocomputersystem (4) mit einem Speicher (42) vorgesehen, in dem die Referenzspannung (U sin $\omega t_x$) wertmäßig hinterlegt ist,

b) zu durch das Taktraster des Mikrocomputersystems (4) vorgegebenen äquidistanten Abtastzeitpunkten werden die diesen Zeitpunkten zugeordneten Referenzspannungswerte aus dem Speicher entnommen,

c) hieraus jeweils für alle Phasen die erforderliche Pulsbreite berechnet und

d) anschließend jeweils für alle Phasen die entsprechenden Steuersignale an den Pulswechselrichter (2) ausgegeben.

**Claims**

1. A digital control set (4) for pulse inverters (2), having a predeterninable interrnediate circuit d.c. voltage ($U_{g1}$), where the pulse width modulation of the control signal of each phase can be determined from the sampling of a reference-voltage in such manner that the product of pulse width ($\Delta t_R$) and intermediate circuit d.c. voltage ($U_{g1}$) is proportional to the product of sampled reference voltage (U sin $\omega t_x$) and sampling period duration (T) characterised by the following features:

a) a microcomputer system (4) is provided, having a store (42) in which the value of the reference voltage (U sin $\omega t_x$) is stored,

b) at equidistant sampling times predetermined by the clock pattern of the microcomputer system (4), the reference voltage values assigned to these times are withdrawn from the store,

c) from the reference voltage values the necessary pulse width is calculated for all phases and

d) then the corresponding control signals are emitted to the pulse inverter (2) for all phases.

**Revendications**

Elément de déclenchement numérique (4) pour onduleurs à impulsions (2) dont la tension continue (Ug2) du circuit intermédiaire peut être préfixée, dans lequel la modulation d'impulsions en durée du signal de commande de chaque phase peut être déterminée, à partir de l'échantillonnage d'une tension de référence, de manière que le produit de la largeur d'impulsion ($\Delta t_R$) et de la tension continue (Ug2) du circuit intermédiaire soit proportionnel au produit de la tension de référence échantillonnée ($U \sin \omega t_x$) et de la durée (T) de la période d'échantillonnage, caractérisé en ce que:

a) il comprend un système à micro-ordinateur (4) avec une mémoire (42) dans laquelle est inscrite la valeur de la tension de référence ($U \sin \omega t_x$);

b) à des instants d'échantillonnage équidistants, préfixés par la trame d'horloge du système à microordinateur (4), les valeurs de tension de référence, coordonnées à ces instants, sont prélevées de la mémoire,

c) la largeur d'impulsion nécessaire pour toutes les phases est calculée à partir de ces valeurs; et

d) ensuite, les signaux de commande correspondants pour toutes les phases sont délivrés à l'onduleur à impulsions (2).

4

$\sin \omega t_x$

1

$U_{gl}$

5

2

R   S   T

3   M

42 — U

41 — $\mu P$

43 — $t_R$

44 — $t_S$

45 — $t_T$

46   SP

$f_z$

47

48

4

**FIG 1**

$\Delta t_R \cdot U_{gl} = U \sin \omega t_x \cdot \dfrac{T}{2}$

$\Delta t_R$

$U_{gl}$

$\omega t$

$U \sin \omega t$

$\omega t_x$

$T$

**FIG 2**

$t_R = \dfrac{T}{2} + \dfrac{T}{2\,U_{gl}} \cdot U \sin \omega t_x$

$t_R$

$t$

$t_S$

$t$

$t_T$

$t$

SP

$T$

**FIG 3**